# EUROPÄISCHE PATENTANMELDUNG

(11) **EP 1 207 710 A1**
(43) Veröffentlichungstag der Anmeldung: **22.05.2002**
(21) Anmeldenummer: 00124930.9
(22) Anmeldetag: 15.11.2000
(51) Int. Cl.: H04Q 7/38

(54) **Verfahren zur Relokation des Diversitätspunktes einer mobilen Station**

(71) Anmelder: SIEMENS AKTIENGESELLSCHAFT, 80333 München (DE)
(72) Erfinder: Fiter, Bruno, 17200 Royan (FR); Gerlich, Notker, Dr., 85540 Haar (DE); Troch, Eddy, 2547 Lint (BE)

(57) **Zusammenfassung**

Verfahren zur Relokation des Diversitätspunktes einer mobilen Station nach einem "soft handover", insbesondere unter Verwendung eines Protokolls für die Mobilitätssteuerung im Internet und einer UMTS-Mobilitätsfunktion
Die Erfindung bezieht sich auf ein Verfahren zur Relokation einer mobilen Station (UE) in einem Funk-Kommunikationsnetz mit zumindest einer ersten und einer zweiten Funknetz-Steuereinrichtung (UPS), wobei die Verwaltung der mobilen Station (UE) und/oder die Übertragung von zur mobilen Station (UE) zu übertragenden Daten von der ersten Funknetz-Steuereinrichtung (S-UPS) der zweiten Funknetz-Steuereinrichtung (D-UPS) übergeben wird.

Vorteilhafterweise wird zur Signalisierung des Übergangs der Verwaltung der mobilen Station (UE) und/oder der Übertragung von zur mobilen Station (UE) zu übertragender Daten von der ersten Funknetz-Steuereinrichtung (S-UPS) zu der zweiten Funknetz-Steuereinrichtung (D-UPS) ein Protokoll für die Mobilitätssteuerung im Internet in Verbindung mit Funknetzsignalisierung aus einem Mobilfunksystem verwendet.

Gemäß einem weiteren Aspekt wird zur Relokation eines Diversitätspunktes einer mobilen Station (UE) vorgeschlagen, in Verbindung mit der Übergabe der Verwaltung an eine zweite Funknetz-Steuereinrichtung (UPS2) den letzten Diversitätszweig und/oder die letzte Verbindung zwischen der ersten und der zweiten Funknetz-Steuereinrichtung (UPS1, UPS2) erst nach dem Ablauf einer der Übergabe der Verwaltung nachgeschalteten Umschaltzeit durchzuführen.

## Beschreibung

Die Erfindung bezieht sich auf ein Verfahren zur Relokation eines Diversitätspunktes einer mobilen Station mit den oberbegrifflichen Merkmalen des Anspruchs 1 bzw. 5, sowie einem Funk-Kommunikationssystem zur Umsetzung eines solchen Verfahrens mit den oberbegrifflichen Merkmalen des Anspruchs 15.

Es gibt eine Vielzahl verschiedenartigster Funk-Kommunikationssysteme, bei denen stationäre und mobile Teilnehmer- bzw. Funk-Stationen miteinander oder mit ortsfesten Zugangspunkten, insbesondere Funknetz-Steuereinrichtungen, kommunizieren.

Hochentwickelte Kommunikationssysteme, wie Mobilfunksysteme GSM (Global System for Mobile Communications) oder UMTS (Universal Mobil Telecommunications System) und Datennetze, die der Steuerung eines Paketversand-Protokolls, insbesondere dem Internet-Protokoll IP, unterliegen, ermöglichen einer Vielzahl von mobilen Stationen parallel zueinander eine Funkverbindung über eine Netz-Steuereinrichtung des entsprechenden Kommunikationsnetzes aufzubauen und für einen Datenaustausch mit entfernten Einrichtungen zu benutzen. Um eine störende Überlagerung der Signale der vielen Funkverbindungen zu verhindern, findet die jeweilige Kommunikation zwischen den einzelnen mobilen Stationen und der jeweils zugeordneten Netz-Steuereinrichtung z.B. über eindeutig zugeordnete Frequenzen, innerhalb fest zugeordneter Zeitschlitze und/oder mit Hilfe codierter Signale statt.

Um eine ausreichende Dienstequalität (QoS: Quality of Service) in einem mobilen Netz unter Verwendung des sogenannten "direct sequenz CDMA (Code Division multiple Access)" auf der Funkschnittstelle bei z. B. UMTS zu erzielen, muss außerdem eine Interferenz zwischen benachbarten Zellen durch das Einführen einer sogenannten Makrodiversität verhindert werden. Dazu erfolgt von einer zentralen Systemstation her eine Steuerung derart, dass eine mobile Station, die mit mehreren Netz- bzw. Basis-Stationen in ihrem Sendebereich kommunizieren kann, von allen jeweils das gleiche Signal empfängt bzw. jeweils das gleiche Signal zu allen überträgt. Wenn sich die mobile Station vollständig außerhalb des Überdeckungsbereiches einer Basisstation herausbewegt, muss diese Basisstation bzw. der Diversitätszweig zu dieser aus dem sogenannten Diversitätsbaum (diversity tree) entfernt werden, während umgekehrt Basis-Stationen bzw. Diversitätszweige zu diesen ohne Übertragungsunterbrechung hinzugenommen werden müssen, wenn die mobile Station in deren Überdeckungsbereich hineinkommt. Ein solcher Übergabemechanismus wird als sanfte Übergabe bzw. "soft handover" bezeichnet.

Von der Vielzahl von Basis-Stationen, mit denen die mobile Station in Verbindung steht, wird eine als Diversitätspunkt in dem Zugriffsnetz festgelegt. Wenn sich die mobile Station von dem Diversitätspunkt in dem Zugriffsnetz zu weit weg bewegt, so dass die Funkverbindung zu dieser abgebaut wird, muss sie einem neuen Diversitätspunkt zugewiesen werden, um die Länge und die Übertragungszeit der sogenannten Diversitätszweige innerhalb vorgegebener Grenzen zu halten, was auch als Leitwegoptimierung (route optimisation) bezeichnet wird.

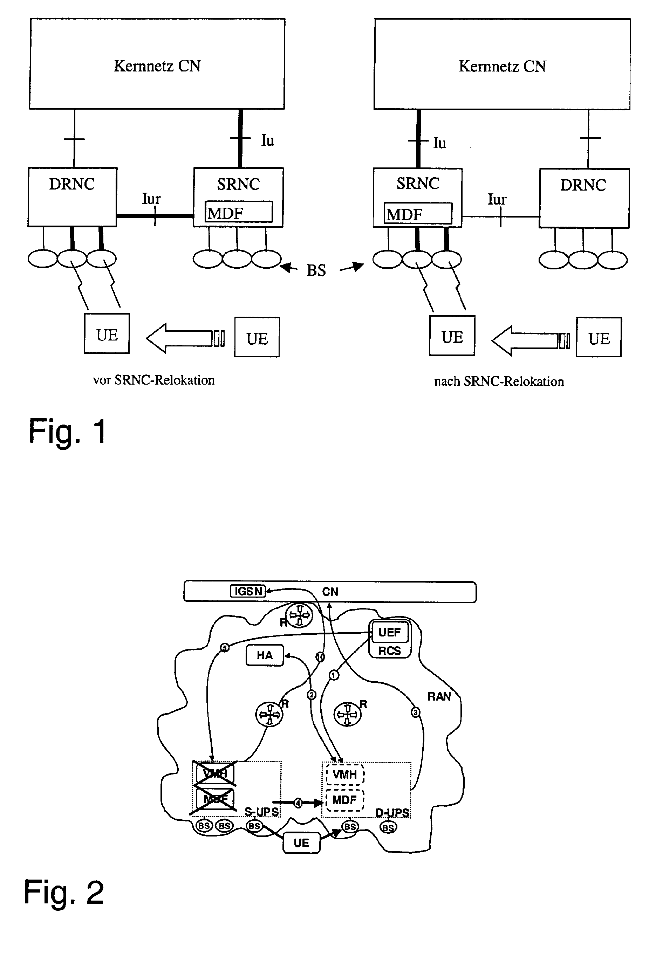

Eine bekannte Lösung zur Realisierung der Umlegung bzw. Relokation des Diversitätspunktes in einem Funkzugriffsnetz (RAN: Radio Access Network) wird nachfolgend beschrieben. In Fig. 1 sind zwei Zustände eines solchen Netzes dargestellt. Zu sehen sind jeweils ein Kernnetz CN, das mit einer bedienenden Funknetzsteuereinrichtung SRNC (Serving Radio Network Controller) und einer "driftenden" bzw. anvisierten Funknetzsteuereinrichtung DRNC (Drift Radio Network Controller) verbunden ist. An beide Funknetzsteuereinrichtungen DRNC und SRNC ist eine Vielzahl von Funkstationen bzw. Basisstationen BS angeschlossen. Die linke Abbildung zeigt die Situation, in der sich eine mobile Station UE aus dem Bereich der bedienenden Funknetz-Steuereinrichtung SRNC in den Bereich einer anvisierten Funknetz-Steuereinrichtung DRNC bewegt und dabei der bedienenden Funknetz-Steuereinrichtung noch voll zugeordnet ist.

Nach der dargestellten Funkaufnahme mit hier zwei Basisstationen der anvisiertenFunknetz-Steuereinrichtung DRNC findet ein Datenaustausch der mobilen Station UE mit dem Kernnetz CN über die Funkverbindungen, über die Verbindungen zwischen den entsprechenden Basisstationen und der anvisierten Funknetz-Steuereinrichtung DRNC, über eine Verbindung Iur mit der bedienenden Funknetz-Steuereinrichtung SRNC, über eine weitere Verbindung zwischen der bedienenden Funknetz-Steuereinrichtung SRNC und über eine Verbindung Iu mit dem Kernnetz CN bzw. umgekehrt statt.

Sobald die Bedingungen für eine Übergabe bzw. Relokation vorliegen, übernimmt die zuvor anvisierte Funknetz-Steuereinrichtung DRNC die Funktion der bedienenden Funknetz-Steuereinrichtung SRNC, wie dies in der rechten Abbildung dargestellt ist. Die Datenkommunikation der mobilen Station UE mit dem Kernnetz CN erfolgt nunmehr direkt von der mobilen Station UE über eine der entsprechenden Basisstationen BS, über die bedienende Funknetz-Steuereinrichtung SRNC und über eine Verbindung Iu bzw. umgekehrt. Insbesondere wird mit der Relokation auch die Steuerung der Makrodiversitätsfunktion MDF von der ehemaligen bedienenden Funknetz-Steuereinrichtung auf die nunmehr bedienende Funknetz-Steuereinrichtung SRNC übertragen.

Für UMTS, Fassung 99 wurde unter 3GPP (3rd Generation Partnership Project) für die Übergabe bzw. Relokation der Funktionalität einer dienenden Funknetz-Steuereinrichtung eine Relokationsfunktion mit der Bezeichnung "Serving RNC Relocation" standardisiert. Diese Lösung ermöglicht die exklusive Anwendung UMTS-spezifischer Protokolle (3GPP TS 23.060). Diese Lösung hat jedoch den Nachteil, dass sie nur bei einer sogenannten nicht-verteilten Funkzugriffs-Netzarchitektur mit einer zentralisierten Funknetzsteuereinrichtung (RNC: Radio Network Controller) anwendbar ist, wobei die zentralisierte Funknetzsteuereinrichtung sowohl Anwenderebenen- als auch Steuerebenen-Funktionen handhabt. Ein weiterer Nachteil besteht darin, dass diese Funktionen bei der Übergabe zeitaufwendige Prozeduren erforderlich machen.

Die Aufgabe der Erfindung besteht darin, ein Verfahren zur Relokation einer mobilen Station nach einem "handover", vorzuschlagen, bei dem die Übergabe vereinfacht abläuft.

Diese Aufgabe wird durch das Verfahren zur Relokation bzw. Zuordnungsverschiebung von Stationen mit den Merkmalen des Patentanspruchs 1, das Verfahren zur Relokation bzw. Zuordnungsverschiebung des Diversitätspunktes von Stationen mit den Merkmalen des Patentanspruchs 5 bzw. ein Kommunikationssystem zur Durchführung eines solchen Verfahrens gemäß den Merkmalen des Patentanspruchs 15 gelöst.

Vorteilhafte Ausgestaltungen sind Gegenstand von abhängigen Ansprüchen.

Ein Verfahren zur Relokation einer mobilen Station in einem Funk-Kommunikationsnetz mit zumindest einer ersten und einer zweiten Funknetz-Steuereinrichtung, wobei die Verwaltung der mobilen Station und/oder die Übertragung von zur mobilen Station zu übertragenden Daten von der ersten Funknetz-Steuereinrichtung der zweiten Funknetz-Steuereinrichtung übergeben wird, ist besonders vorteilhaft, wenn zur Signalisierung des Übergangs der Verwaltung der mobilen Station und/oder der Übertragung von zur mobilen Station zu übertragender Daten von der ersten Funknetz-Steuereinrichtung zu der zweiten Funknetz-Steuereinrichtung ein Protokoll für die Mobilitätssteuerung im Internet in Verbindung mit Funknetzsignalisierung aus einem Mobilfunksystem verwendet wird.

Als das Protokoll für die Mobilitätssteuerung im Internet ein Protokoll zur Registrierungssignalisierung aus dem Mobilfunksystem zu verwenden erhöht die Flexibilität bei der Relokationsprozedur. Besonders vorteilhaft ist dabei, ein Protokoll für die Mobilitätssteuerung im Internet als Registrierungssignalisierung von der Funknetzsignalisierung anregen zu lassen. Zweckmäßigerweise wird bei der Relokation der mobilen Station die Relokation von deren Diversitätspunkt im Funk-Kommunikationsnetz durchgeführt.

Ein weiteres Verfahren, mit eigenständiger erfinderischer Bedeutung, zur Relokation eines Diversitätspunktes einer mobilen Station in einem Funk-Kommunikationsnetz mit zumindest einer ersten und einer zweiten Funknetz-Steuereinrichtung, wobei bei einem Wechsel der mobilen Station in den Bereich der zweiten Funknetz-Steuereinrichtung die zu übertragenden Daten von der ersten Funknetz-Steuereinrichtung über eine Verbindung zur zweiten Funknetz-Steuereinrichtung übertragen und von dort zur mobilen Station weiterübertragen werden und wobei die Verwaltung der mobilen Station und/oder der Übertragung von zur mobilen Station zu übertragenden Daten von der ersten Funknetz-Steuereinrichtung der zweiten Funknetz-Steuereinrichtung übergeben wird und wobei in Verbindung mit der Übergabe der Verwaltung an die zweite Funknetz-Steuereinrichtung der letzte Diversitätszweig und/oder die letzte Verbindung zwischen der ersten und der zweiten Funknetz-Steuereinrichtung gelöscht werden, ist besonders vorteilhaft, wenn das Löschen des letzten Diversitätszweigs und/oder der letzten Verbindung erst nach dem Ablauf einer der Übergabe der Verwaltung nachgeschalteten Umschaltzeit erfolgt.

Die Relokation in Verbindung mit einem "soft handover" durchzuführen, bei dem die mobile Station sich aus dem Bereich einer ersten Funknetzsteuereinrichtung heraus in den Bereich einer zweiten Funknetzsteuereinrichtung hinein bewegt, ermöglicht die Verwendung bereits für sich bekannter Prozeduren.

Daten können zwischen der mobilen Station und dem Funk-Kommunikationsnetz vorteilhafterweise auch direkt durch die Funknetz-Steuereinrichtung geführt werden.

Die Übergabe der Verwaltung bzw. der Übertragung von Daten durch die mobile Station einzuleiten, reduziert den Verwaltungsaufwand von Einrichtungen des Kommunikationssystems. Die Übergabe der Verwaltung bzw. der Übertragung von Daten nach einem vorgegebenen Abfall der Verbindungsqualität, insbesondere eines letzten Diversitätszweigs, zur Funknetz-Steuereinrichtung, vorzugsweise einem Abfall unter einen vorgegebenen Grenzwert auszulösen, ist insbesondere bei einer Steuerung von der mobilen Station aus vorteilhaft.

Während der Übergabe der Verwaltung bzw. der Übertragung von Daten eintreffende Daten zwischenzuspeichern verhindert einen Datenverlust und ermöglicht eine zügige Übertragung der Verwaltung.

In Verbindung mit der Übergabe der Verwaltung bzw. der Übertragung von Daten einen virtuellen Host mit Funktionalität der mobilen Station in der verwaltenden Funknetz-Steuereinrichtung einzurichten, ermöglicht eine Umsetzung in bestehenden Systemen ohne aufwendige bauliche oder programmiertechnische Anpassungen. Vorteilhaft ist dabei insbesondere, wenn in Verbindung mit der Übergabe der Verwaltung bzw. der Übertragung von Daten der virtuelle Host hinsichtlich der Adressierung von der Netzseite aus die Funktion der mobilen Station übernimmt und/oder von der Seite der mobilen Station aus die Funktion eines Adressenspeichers und Adressenverwalters für funktionswichtige netzinterne Adressen übernimmt.

In Verbindung mit der Übergabe der Verwaltung bzw. der Übertragung von Daten ein Mobil-Internetprotokoll und/oder eine UMTS-Mobilitätsfunktion zu verwenden, ermöglicht eine einfache Umsetzung bei diesen bereits für sich bekannten Kommunikationssystemen.

Vorteilhafterweise ermöglicht ein Funk-Kommunikationssystem mit zumindest einer ersten und einer zweiten Funknetz-Steuereinrichtung zur Verwaltung zumindest einer mobilen Station, wobei die Verwaltung der mobilen Station und/oder der Übertragung von zur mobilen Station zu übertragenden Daten von der ersten Funknetz-Steuereinrichtung der zweiten Funknetz-Steuereinrichtung übergebbar ist, die Umsetzung eines solchen Verfahrens, wenn zumindest eine Einrichtung zum Durchführen eines solchen Verfahrens entsprechend ausgestaltet ist. Besonders vorteilhaft ist dabei eine Einrichtung, die einen virtuellen Host mit aus der mobilen Station ausgelagerten Relokationsfunktionen einrichten und verwalten kann.

Ein Ausführungsbeispiel wird nachfolgend anhand der Zeichnung näher erläutert. Es zeigen:
- Fig. 1: eine Netzsituation in einem Funknetz vor bzw. nach einer Relokation einer mobilen Station;
- Fig. 2: schematisch den Ablauf einer Relokationsprozedur gemäß dem vorliegenden Ausführungsbeispiel in einem Kommunikationsnetz;
- Fig. 3-6: schematisch die Systemzustände in einem Kommunikationsnetz während einer Relokation des Diversitätspunktes einer mobilen Station.

Wie aus den Fig. 1 und 2 ersichtlich, ist das Kommunikationsnetz gemäß Fig. 2 im wesentlichen wie das aus Fig. 1 aufgebaut. Zur Unterscheidung der neuen Technologie werden die Funknetz-Steuereinrichtungen DRNC bzw. SRNC nachfolgend als bedienender bzw. anvisierter Anwendungsebenen-Server S-UPS (Serving User Plane Server) bzw. D-UPS (Drift User Plane Server) bezeichnet. Das Kernnetz CN weist unter anderem einen integrierten GPRS-Diensteknoten IGSN (Integrated GPRS Service Node; GPRS: General Packet Radio Service) auf. Dieser dient als Gateway bzw. Schnittstelle des Kernnetzes CN zu dem Funkzugriffsnetz, das allgemein als Radio Access Network RAN bezeichnet wird. Das Funkzugriffsnetz RAN weist eine Vielzahl hier relevanter Einrichtungen auf, insbesondere Anwender- bzw. bzw. Teilnehmerebenen-Server UPS, über die Verbindungen mit stationären oder mobilen Teilnehmer-Stationen UE aufgebaut und unterhalten werden. Weitere Einrichtungen in dem Zugriffsnetz RAN sind sogenannte Router R, die als Schnittstellen zu dem sogenannten IP-Backbone, also Internetprotokoll-gesteuerten Fernleitungen oder Hauptleitungen dienen. Weiterhin umfasst das Funkzugriffsnetz RAN Teilnehmereinrichtungsfunktionen UEF (User Equipment Function) für alle Signalisierungen einer mobilen Station UE im Funksteuerungsserver RCS (Radio Control Server), der einen physikalischen Knoten im Funkzugriffsnetz RAN ausbildet. Weiterhin befindet sich im Funkzugriffsnetz RAN ein Heimatagent HA (Home Agent), der vergleichbar zum Heimatregister in bestehenden Funk-Kommunikationsnetzen zur Registrierung eines mobilen Teilnehmers bzw. einer mobilen Station UE dient, wobei der Heimatagent (HA) hier auch zur physikalischen Weiterleitung von Datenpaketen dient bzw. dienen kann.

Zur Verbesserung des Neuzuordnungs- bzw. Relokationsverfahrens wird vorgeschlagen, einen Mechanismus unter Verwendung einer Kombination von Protokollen, wie sie beispielsweise als UMTS-spezifische Protokolle bekannt sind, mit IP-basierten Protokollen, wie sie beispielsweise aus dem IETF-standardisierten Mobilitätsprotokoll "Mobile IP version 6 (MIPv6)" bekannt sind, einzusetzen.

Bei dem nachfolgend anhand von Fig. 2 erläuterten Ablauf wird angenommen, dass die Makrodiversitätsfunktion MDF für eine mobile Station UE, die sich im Überdeckungsbereich zweier Teilnehmerebenen-Server S-UPS und D-UPS befindet, in dem physikalischen Knoten, d.h. in einer physikalischen Einrichtung, hier dem bedienenden Teilnehmerebenen-Server S-UPS befindet. Die Teilnehmerebenen-Server UPS können allgemein auch Funknetz-Steuereinrichtungen sein. Neben Basisstationen BS, die in dem Diversitätsbaum mit diesem bedienenden Teilnehmerebenen-Server S-UPS verbunden sind und mit der mobilen Station UE kommunizieren, gibt es weitere Basisstationen BS, die mit dem anderen hier dargestellten, und als anvisierten Teilnehmerebenen-Server D-UPS bezeichneten Server verbunden sind.

Die Signalisierungsprotokolle für eine mobile Station UE werden in dem Funkzugriffsnetz RAN durch die sogenannte Teilnehmereinrichtungsfunktion UEF gehandhabt. Weiterhin wird eine Klientenrolle des Mobilen-Internet-Protokolls virtuell im Funkzugriffsnetz RAN realisiert. Dies bedeutet hier, dass ein Teil der Funktionen aus der mobilen Station als Klient in das Funkzugriffsnetz RAN ausgelagert wird. Zur Auslagerung eines Teiles der Klientenfunktion der mobilen Station UE wird in dem dienenden Teilnehmerebenen-Server S-UPS ein virtueller mobiler Host VMH bereitgestellt.
Die Umsetzung der Verbesserung einer Relokationsfunktion beruht insbesondere auf den nachfolgenden Prinzipien: Wenn sich eine mobile Station UE im Funkzugriffsnetz RAN durch eine Kommunikationsaufnahme über eine Basisstation BS anmeldet, findet für diese mobile Station UE eine IP-Registrierung bei dem Heimatagenten HA und dem Kernnetz CN statt. Dabei kann eine für sich bekannte Registrierungssignalisierung verwendet werden. Dies hat zur Folge, dass Datenpakete in Abwärtsrichtung, d.h. vom Kernnetz CN und/oder Funkzugriffsnetz RAN zur mobilen Station UE hin, über insbesondere den Heimatagenten HA und über den als bedienenden Teilnehmerebenen-Server S-UPS, der der momentane Anbindungspunkt für die mobile Station UE ist, geleitet bzw. geroutet werden.

Ausgenutzt werden vorzugsweise die Möglichkeiten der UMTS-spezifischen Mobilitätsfunktionen oder vergleichbarer Funktionen, die insbesondere dem Funksteuerungsserver RCS zugeordnet sind und das Hinzufügen oder Entfernen von Diversitätszweigen bzw. Diversitätspunkten während einer sanften Übergabe bzw. eines soft handover handhaben können. Solange die mobile Station UE einen Diversitätszweig (diversity leg) aufweist, über den sie mit einer Basisstation BS verbunden ist, die an den dienenden Teilnehmerebenenserver S-UPS angeschlossen ist, werden keine IP-Neuregistrierungen für die mobile Station UE vorgenommen.

Das Entfernen von Diversitätszweigen wird in der Regel durch Zellaktualisierungs-Nachrichten von der mobilen Station UE aus eingeleitet. Wenn die Teilnehmereinrichtungsfunktion UEF nach dem Entfernen eines Diversitätszweiges erfasst, dass der letzte Diversitätszweig zwischen der mobilen Station UE und dem dienenden Teilnehmerebenen-Server S-UPS entfernt wurde, sendet die Teilnehmereinrichtungsfunktion UEF eine Nachricht an einen der driftenden Teilnehmerebenen-Server D-UPS, mit dem die mobile Station UE über dessen Basisstationen BS in Verbindung steht. Zur Vereinfachung der Darstellung wird hier angenommen, dass die mobile Station UE nur mit zumindest einer Basisstation BS des in der Zeichnung rechts dargestellten Teilnehmerebenen-Server D-UPS in Verbindung steht. Entsprechend sendet die Teilnehmereinrichtungsfunktion UEF diesem dienenden Teilnehmerebenen-Server D-UPS die Nachricht, einen virtuellen mobilen Host VMH und eine Makrodiversitätsfunktion MDF einzurichten, so dass der bislang anvisierte Teilnehmerebenen-Server D-UPS für diese mobile Station UE die Funktion eines bedienenden Teilnehmerebenen-Servers übernehmen kann. Die Übermittlung dieser Nachricht ist in Fig. 2 durch den mit einer 1 gekennzeichneten Pfeil dargestellt. Diese neue UMTS-spezifische Nachricht dient somit als Trigger für einen virtuellen mobilen Host oder die Einrichtung eines solchen, um die üblichen bzw. Standard-MIP-Registrierungen beginnen zu können.

Weiterhin wird auf der Internetprotokoll-Ebene (IP layer) der Leitpfad (routing path) zwischen dem Kernnetz CN und der mobilen Station UE durch eine Standard-MIP-Registrierungs-Funktion geändert, die durch den neuen bedienenden Teilnehmerebenen-Server (S-UPS) veranlasst wird, und zwar sowohl in Richtung des Heimatagenten HA als auch des Kernnetzes CN (in Fig. 2 als Pfeile 2 bzw. 3 skizziert).

Pakete, die sich noch auf dem Weg zum alten bedienenden Teilnehmerebenen-Server S-UPS befinden (still in-flight) können die mobile Station UE immer noch erreichen, und zwar über die Diversitätsverbindung 4 zwischen den beiden Teilnehmerebenen-Servern UPS, da diese Verbindung noch über eine gewisse Zeit aufrechterhalten wird. Mit anderen Worten, das Löschen des letzten Diversitätszweigs und/oder der letzten Verbindung erfolgt erst nach dem Ablauf einer der Übergabe der Verwaltung nachgeschalteten Umschaltzeit.

Die Teilnehmereinrichtungsfunktion UEF weist den alten bedienenden Teilnehmerebenen-Server S-RNC an, die Ressourcen für die ehemals auf ihn bezogene mobile Station UE zu löschen (Pfeil 5).

Hinsichtlich des als zugrundeliegendes Kommunikationssystem beispielhaft gewählten UMTS wird für die Prinzipien und Registrierungsfunktionen von insbesondere MIPv6 verwiesen, insbesondere auf die Veröffentlichungen IETF spec "mobility support in IPv6", draft-ietf-mobileip-ipv6-12. Das Einbinden von MIPv6 bietet eine Vielzahl von Vorteilen, wie folgt:

Das Anwenden von MIPv6 ermöglicht einer Anwendung, insbesondere einer entfernten Einrichtung, Datenpakete zu einer mobilen Station UE mit einer festen IP-Adresse zu senden, wobei diese feste IP-Adresse von dem tatsächlichen momentanen Anbindungspunkt dieser mobilen Station UE an das IP-Netz unabhängig ist, in unserem Fall der Anbindung an die konkrete Basisstation BS des Funkzugriffsnetzes RAN. Dies bedeutet insbesondere, dass die Teilnehmerebenen-Protokollschichten oberhalb des Internetprotokolls IP vom Durchführen von Änderungen von IP-Adressen entlastet werden.

Weiterhin ist MIPv6-Software als kommerzielle IP-Software verfügbar, so dass Entwicklungsarbeiten eingespart werden können und Zuverlässigkeit gegenüber ungeprüften Neuprogrammierungen erhöht wird.

Bei den derzeitigen Entwicklungen zu mobilen end-zu-end IP-Netzen wird der Trend unterstützt, die für mobile Stationen spezifischen Mobilitätsprotokolle durch Funktechnologieunabhängige Protokolle aus dem Internet und der IP-Welt zu ersetzen. Die Verwendung von MIPv6 für die Relokation ist ein Schritt in diese Richtung, jedoch nicht zwingend erforderlich.

Ferner kann MIPv6 auch zur Realisierung eines harten Übergangs (hard handover), d.h. einen Verbindungsabbruch und Verbindungsneuaufbau, verwendet werden, wobei die Funktionalität für verschiedene Aufgaben gemeinsam verwendbar ist.

Die vorstehend beschriebene und an einem weiteren Beispiel nachfolgend erläuterte Lösung kann insbesondere in einer verteilten IPbRAN-Architektur verwendet werden, bei der Funktionen auf der Teilnehmerebene und Funktionen auf der Steuerebene über mehrere physikalische Knoten verteilt werden können.

Ein schnelles Umschalten durch das Austauschen des standardisierten MIP-Bewegungserfassungsmechanismus ("Move Detection") mit dem Teilnehmereinrichtungsfunktions-Trigger ist möglich. Die Einbindung von MIPv6 oder vergleichbaren Protokollen verhindert insbesondere auch einen Paketverlust während der Relokation bei der Anwendung eines solchen einfachen Verfahrens.

Zur Erzielung einer besonders vorteilhaften Umsetzung des Verfahrens wird vorgeschlagen, einerseits einen Teil der MIP-Standardmechanismen auszutauschen, um die Relokationsprozedur zu beschleunigen und andererseits die UMTS-Funktionalität zu modifizieren, um Paketverluste während der Relokationsprozedur zu verhindern. Beide Aspekte bringen eigenständig Vorteile für das vorgeschlagene Relokationsverfahren.

Entsprechend der genannten Spezifikationen für ein mobiles Internetprotokoll (Mobil IP specification) entscheidet die mobile Station UE mit Hilfe eines als "Move Detection" bzw. Bewegungserfassung bezeichneten Mechanismus, wann es erforderlich ist, eine Neuregistrierung vorzunehmen. Entsprechend den derzeit üblichen Standards (MIPv4 und MIPv6) beruht die Bewegungserfassung auf über die Funkverbindung mitgeteilten Adressen (broadcasted addresses), welche die mobile Station bzw. der Host auf den Teilnehmerdatenkanälen empfängt, und zwar entweder von einem fremden Agenten (foreign agent by MIPv4) oder von dem vorgegebenen Router R, der die momentan zuständige Basisstation versorgt (bei MIPv6). Wenn die mobile Station UE (mobil host) eine Änderung der über Funk mitgeteilten Adresse erfasst, startet sie die Registrierungsfunktion bzw. Registrierungsprozedur.

Um diesen Umschalteprozess zu beschleunigen, was für Echtzeitdienste wichtig und zum Vermeiden des Verlustes von Paketen vorteilhaft ist, wird hier vorgeschlagen, anstelle des Bewegungserfassungsmechanismus das Triggern bzw. Anregen des IP-Klienten der mobilen Station UE durchzuführen. Der zu triggernde IP-Klient der mobilen Station UE ist in den aktuell zuständigen virtuellen mobilen Host VMH ausgelagert und soll durch das Triggern unmittelbar nach der Erzeugung eines virtuellen mobilen Host VMH, der in dem bislang anvisierten Teilnehmerebenen-Server D-UPS erzeugt wurde, die Registrierungen im Heimatagent HA vornehmen.

In Anlehnung an die UMTS-Funktionalität wird zum Vermeiden des Verlustes von Datenpaketen in Abwärtsrichtung während der Relokation vorgeschlagen, Datenpakete, die während dessen zu dem bedienenden Teilnehmerebenen-Server S-RNC geleitet werden, zu dem anvisierten Teilnehmerebenen-Server D-RNC unter Verwendung eines IP-Tunnels zwischen dem dienenden Teilnehmerebenen-Server S-RNC und dem driftenden Teilnehmerebenen-Server D-RNC weiter zu leiten, wobei hierfür insbesondere eine entsprechende Modifikation der 3GPP-Spezifikation möglich ist. Bei einer derartigen Umsetzung ist es in vorteilhafter Weise möglich, den Diversitätszweig zwischen dem dienenden Teilnehmerebenen-Server S-RNC und dem driftenden Teilnehmerebenen-Server D-RNC, wie für sich aus z.B. 3GPP '99 bekannt, nicht unmittelbar zu löschen. In vorteilhafter Weise kann dabei jedoch alternativ der bestehende Diversitätszweig über eine gewisse Zeit aufrecht erhalten werden, und zwar selbst nach der neuen IP-Registrierung für die mobile Station UE, so dass bereits auf dem Weg zum bedienenden Teilnehmerebenen-Server S-UPS befindliche Datenpakete die mobile Station UE noch erreichen.

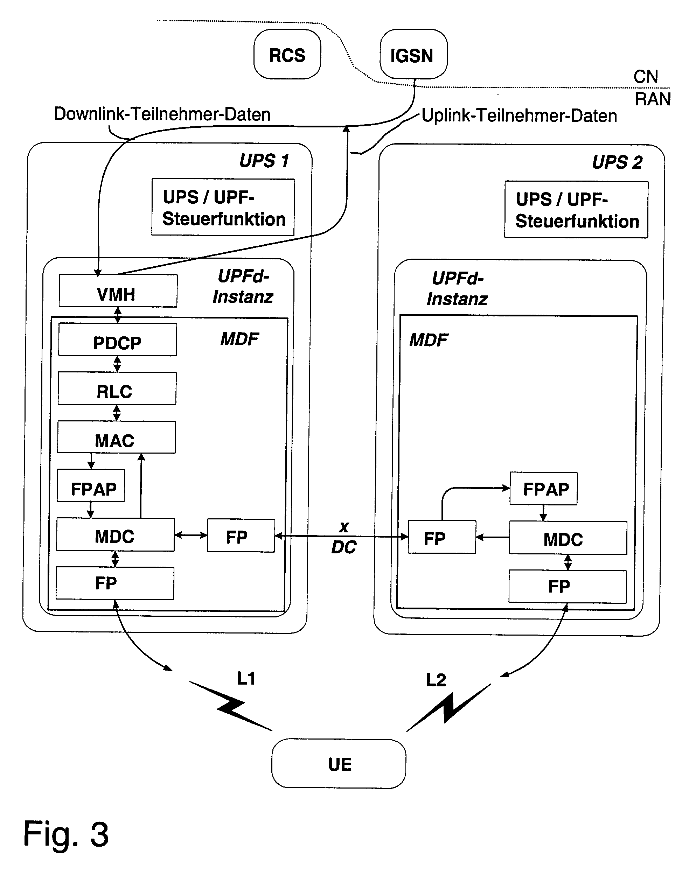

Nachfolgend wird anhand der Fig. 3 bis 6 der Ablauf einer Relokation für die Einrichtung eines neuen bedienenden Teilnehmerebenen-Servers UPS anschaulich verdeutlicht. Fig. 3 stellt dabei die Situation dar, bei der ein erster Teilnehmerebenen-Server UPS1 der bedienende Teilnehmerebenen-Server und ein zweiter Teilnehmerebenen-Server UPS2 der anvisierte Teilnehmerebenen-Server ist. Ein Makrodiversitätszweig MDB existiert zwischen dem dienenden Teilnehmerebenen-Server UPS1 und der mobilen Station UE von der Makrodiversitätsfunktion MDF in dem bedienenden Teilnehmerebenen-Server UPS1 aus über den anvisierten Teilnehmerebenen-Server UPS2. Das vorliegende Funkzugriffsnetz RAN weist eine verteilte Architektur auf. Die Teilnehmereinrichtungsfunktions-Instanzen (UEF) werden in einem physikalischen Knoten verwaltet, der als Funksteuerungs-server RCS dargestellt ist. Die Teilnehmerebenenfunktionen, die auf eine einzelne mobile Station UE bezogen sind, sind als zugewiesene Teilnehmerebenenfunktionen UPFd (dedicated User Plane Function) dargestellt. Diese zugewiesenen Teilnehmerebenenfunktionen UPFd werden jeweils in einem Teilnehmerebenen-Server UPS verwaltet. Dabei sind die funktionalen Blöcke PDCP, RLC, MAC, FPAP, MDC und FP im nachfolgenden beschriebene Untereinheiten der ansonsten als Makrodiversitätsfunktion MDF bezeichneten Funktion. Die zugewiesenen Teilnehmerebenen-Funktionsinstanzen (UPFd) werden durch entsprechende Steuerebenen-Nachrichten erzeugt, wie dies im Wesentlichen vorstehend beschrieben wurde. In dem Kernnetz CN dient der integrierte Paketdatendienst-Diensteknoten IGSN als Gateway-Knoten zu dem Funkzugriffsnetz RAN. Dieser integrierte Paketdatennetz-Diensteknoten IGSN setzt Teilnehmerdaten in Pakete gemäß dem IP-Protokoll mit der Adresse des virtuellen mobilen Host VMH als der Zieladresse und der Adresse des integrierten Paketdatennetz-Dienstenetzknoten IGSN als der Quelladresse ein. Der integrierte Paketdatennetz-Diensteknoten IGSN stellt daher einen zugeordneten bzw. korrespondierenden Knoten für den gerade zuständigen virtuellen mobilen Host VMH dar. Der virtuelle mobile Host weist eine lokale IP-Adresse, üblicherweise als care-of-address bezeichnet, auf, die zum Subnetz gehört, in dem sich die mobile Station UE befindet, wobei diese care-of-address im Heimatagent HA und in dem integrierten Paketdatennetz-Diensteknoten IGSN registriert ist, wodurch Daten, die in Abwärtsrichtung zu übertragen sind, zum bedienenden Teilnehmerebenen-Server UPS1 geleitet werden. Nachfolgend wird von diesem Systemzustand die Relokation des dienenden Teilnehmerebenen-Servers beschrieben.

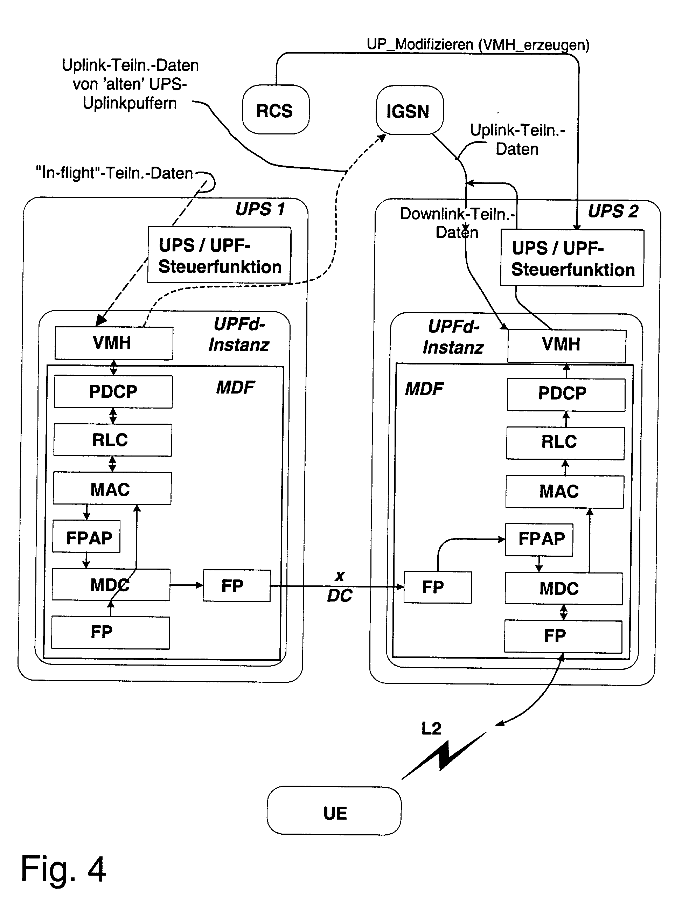

Wie vorstehend ausgeführt, wird die Relokation des bedienenden Teilnehmerebenen-Servers S-UPS nach dem Löschen der letzten bestehenden Funkverbindung L1 zwischen der mobilen Station UE und dem bedienenden Teilnehmerebenen-Server UPS1 eingeleitet. Nach einer entsprechenden Aktivierung von der mobilen Station UE aus, regt der Funksteuerungsserver RCS die Relokationsprozedur durch das Erzeugen eines virtuellen mobilen Host VMH bei dem anvisierten Teilnehmerebenen-Server UPS2 über eine Anweisung UP_modifizieren an, wie dies aus Fig. 4 ersichtlich ist. Die damit übertragene Anweisung VMH_erzeugen erzeugt entsprechende Instanzen für zugewiesene Teilnehmerebenen-Funktionen UPSd der Ebenen (layer) des virtuellen mobilen Host VMH, von PDCP, RLC und MAC in dem bislang anvisierten Teilnehmerebenen-Server UPS2. Weiterhin wird der Makrodiversitäts-Steuerkanal (MDC Channel) für die Aufwärtsverbindung (Uplink) von der mobilen Station UE zum Funkzugriffsnetz RAN hin auf die lokale Mediumzugriffs-Steuerebene (MAC layer) des bislang anvisierten Teilnehmerebenen-Servers UPS2 umgeschaltet.

Der neue virtuelle mobile Host VMH wird dann in dem Heimatagent HA und dem zugeordneten integrierten Paketdatennetz-Diensteknoten IGSN registriert, wobei dessen care-of-address vorzugsweise unter Verwendung standardisierter MIPv6-Registrierungsfunktionen registriert wird.

Dadurch, dass die UP_modifiziere-Mitteilung der Trigger zum Starten der Registrierungsfunktionen ist, läuft diese Registrierung schneller als bei der Verwendung des bisher standardisierten Bewegungserfassungsmechanismus ab. Wenn der neue virtuelle mobile Host VMH zum Starten der MIP-Registrierungsfunktionen getriggert wird, z. B. durch den Aufruf einer entsprechenden Funktion, einer internen Mitteilung bzw. Nachricht oder einen entsprechenden Teil von Verarbeitungs-Beginnparametern des virtuellen mobilen Host, liefert der nun zuständige, ehemalige anvisierte Teilnehmerebenen-Server UPS2 die erforderlichen Agentenadressen, insbesondere MIP-Agentenadressen, zu dem virtuellen mobilen Host VMH, d.h. insbesondere die Adressen des Heimatagenten HA und des integrierten Paketdatennetz-Diensteknoten IGSN, die care-of-address und die IP-Heimatadresse des mobilen Host UE.

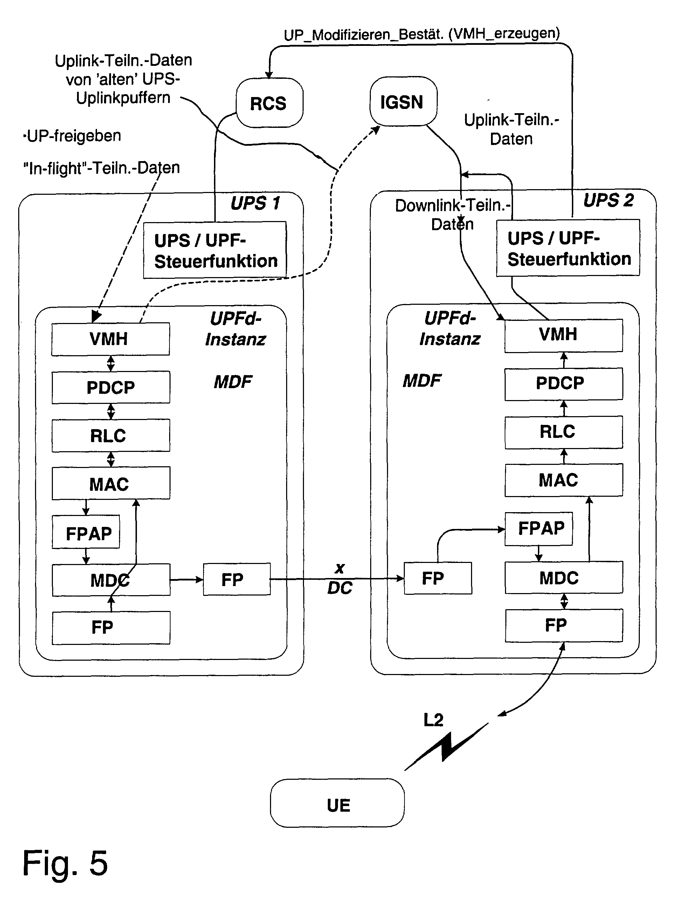

In diesem Zustand des Systems wird jeglicher Verkehr, der von dem integrierten Paketdatennetz-Diensteknoten IGSN bei dem ehemalig anvisierten Teilnehmerebenen-Server UPS2 eintrifft, direkt unter Kontrolle des virtuellen mobilen Host VMH in diesem zwischengespeichert. Dieser ehemals anvisierte Teilnehmerebenen-Server UPS2 bestätigt das Erzeugen der Instanzen für die zugewiesenen Teilnehmerebenen-Funktionen UPFd. Nach dem Empfang dieser Bestätigung kann der Funksteuerungs-Server RCS den virtuellen mobilen Host VMH auf dem ursprünglichen, ehemals bedienenden Teilnehmerebenen-Server UPS1 durch das Aussenden einer Freigabenachricht UP_freigeben löschen lassen, wie dies in Fig. 5 dargestellt ist. Die Mitteilung bzw. Nachricht zur Freigabe UP_freigeben bewirkt dabei jedoch einen zeitüberwachten Zustand, während welchem der virtuelle mobile Host VMH noch Datenpakete akzeptiert, die bereits auf dem Weg zum ehemals bedienenden Teilnehmerebenen-Server UPS1 sind, und leitet diese zum ehemals anvisierten und nun bedienenden Teilnehmerebenen-Server UPS2 weiter, bevor schließlich die Diversitätsverbindung MDB bzw. DC zwischen dem ehemals bedienenden Teilnehmerebenen-Server UPS1 und dem nunmehr bedienenden Teilnehmerebenen-Server UPS2 freigegeben bzw. aufgehoben wird.

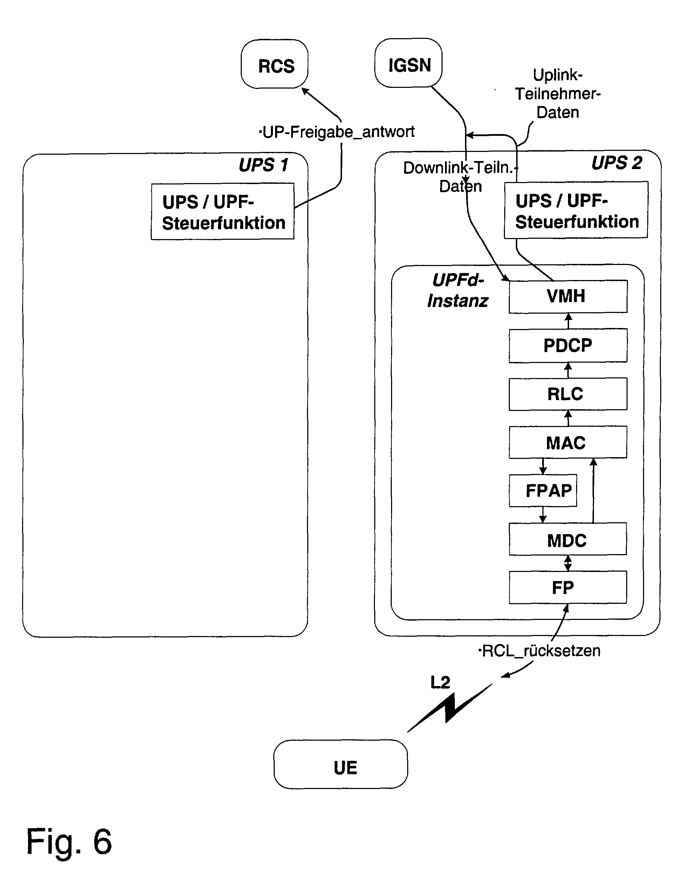

Der ehemals bedienende Teilnehmerebenen-Server UPS1 wartet, bis entsprechende Pufferspeicher für die Mediumzugriffssteuerung MAC, die Funkverbindungssteuerung RLC, das Paketdaten-Steuerungsprotokoll PDCP und den virtuellen mobilen Host VMH leer sind und ein bei der Umstellung aktivierter Zeitgeber für noch auf dem Weg befindliche Pakete abgelaufen ist, bevor die Instanzen für die zugewiesenen Teilnehmerebenenfunktionen UPFd in dem ehemals bedienenden Teilnehmerebenen-Server UPS1 gelöscht bzw. entfernt werden, wie dies in Fig. 6 dargestellt ist. Ein Verankerungspunkt für das Rahmenprotokoll FPAP (Frame Protocol Anchor Point) ist für das Leiten des Verkehrs in Abwärtsrichtung zur mobilen Station UE hin von entweder dem ehemals dienenden Teilnehmerebenen-Server UPS1 oder der lokalen Mediumzugriffs-Steuerungsebene (MAC layer) verantwortlich.

Nach der Erzeugung des virtuellen mobilen Host in dem nunmehr dienenden Teilnehmerebenen-Server UPS2 wartet der Verankerungspunkt für das Rahmenprotokoll FPAP auf das Ablaufen einer Zeitüberwachung (time out), das vorteilhafterweise an leeren Rahmenprotokoll-Rahmen (FP frames) erkannt werden kann, bevor Daten für die mobile Station UE in Abwärtsrichtung von dem ehemals bedienenden Teilnehmerebenen-Server UPS1 zu der lokalen Mediumzugriffs-Steuerschicht des ehemals anvisierten Teilnehmerebenen-Servers UPS2 umgeschaltet werden.

Nach der Umschaltung des Verankerungspunktes für das Rahmenprotokoll FPAP zur lokalen Mediumzugriffssteuerung MAC kann der Verkehr in Abwärtsrichtung, der beim lokalen virtuellen mobilen Host ankommt, einschließlich zwischenzeitlich gepufferter Daten zur mobilen Station UE übertragen werden.

Die Instanz für das lokale Rahmenprotokoll FP bzw. FPAP kann daraufhin in dem ehemals bedienenden Teilnehmerebenen-Server UPS1 gelöscht werden, woraufhin eine Funkverbindungssteuerungs-Rücksetzmitteilung RCL_reset über einen Funkverbindungssteuerungs-Bestätigungskanal (RLC acknowledged mode channel), sofern ein solcher vorgesehen wird, zur mobilen Station UE gesendet wird, um die Funkverbindungssteuerungsebene mit der mobilen Station UE zu synchronisieren.

## Patentansprüche

1. Verfahren zur Relokation einer mobilen Station (UE) in einem Funk-Kommunikationsnetz mit zumindest einer ersten und einer zweiten Funknetz-Steuereinrichtung (UPS), wobei die Verwaltung der mobilen Station (UE) und/oder die Übertragung von zur mobilen Station (UE) zu übertragenden Daten von der ersten Funknetz-Steuereinrichtung (S-UPS) der zweiten Funknetz-Steuereinrichtung (D-UPS) übergeben wird, **dadurch gekennzeichnet, dass** zur Signalisierung des Übergangs der Verwaltung der mobilen Station (UE) und/oder der Übertragung von zur mobilen Station (UE) zu übertragenden Daten von der ersten Funknetz-Steuereinrichtung (S-UPS) zu der zweiten Funknetz-Steuereinrichtung (D-UPS) ein Protokoll für die Mobilitätssteuerung im Internet in Verbindung mit Funknetzsignalisierung aus einem Mobilfunksystem verwendet wird.

2. Verfahren nach Anspruch 1, bei dem
als das Protokoll für die Mobilitätssteuerung im Internet ein Protokoll zur Registrierungssignalisierung aus dem Mobilfunksystem verwendet wird.

3. Verfahren nach Anspruch 1 oder 2, bei dem
das Protokoll für die Mobilitätssteuerung im Internet als Registrierungssignalisierung von der Funknetzsignalisierung angeregt wird.

4. Verfahren nach einem vorstehenden Anspruch, bei dem
bei der Relokation der mobilen Station (UE) die Relokation von deren Diversitätspunkt im Funk-Kommunikationsnetz durchgeführt wird.

5. Verfahren, insbesondere nach einem vorstehenden Anspruch, zur Relokation eines Diversitätspunktes einer mobilen Station (UE) in einem Funk-Kommunikationsnetz mit zumindest einer ersten und einer zweiten Funknetz-Steuereinrichtung (UPS1, UPS2; S-UPS, D-UPS), wobei
- bei einem Wechsel der mobilen Station (UE) in den Bereich der zweiten Funknetz-Steuereinrichtung (UPS2; D-UPS) die zu übertragenden Daten von der ersten Funknetz-Steuereinrichtung (UPS1; S-UPS) über eine Verbindung (MDB; DC; 4) zur zweiten Funknetz-Steuereinrichtung (UPS2; D-UPS) übertragen und von dort zur mobilen Station (UE) weiterübertragen werden und wobei
- die Verwaltung der mobilen Station (UE) und/oder die Übertragung von zur mobilen Station (UE) zu übertragenden Daten von der ersten Funknetz-Steuereinrichtung (S-UPS) der zweiten Funknetz-Steuereinrichtung (D-UPS) übergeben wird und wobei
- in Verbindung mit der Übergabe der Verwaltung an die zweite Funknetz-Steuereinrichtung (UPS2) der letzte Diversitätszweig und/oder die letzte Verbindung zwischen der ersten und der zweiten Funknetz-Steuereinrichtung (UPS1, UPS2) gelöscht werden,
**dadurch gekennzeichnet,**
**dass** das Löschen des letzten Diversitätszweigs und/oder der letzten Verbindung erst nach dem Ablauf einer der Übergabe der Verwaltung nachgeschalteten Umschaltzeit erfolgt.

6. Verfahren nach einem vorstehenden Anspruch, bei dem die Relokation in Verbindung mit einem "soft handover" erfolgt, bei dem die mobile Station (UE) sich aus dem Bereich einer ersten Funknetzsteuereinrichtung (UPS1; S-UPS) heraus in den Bereich einer zweiten Funknetzsteuereinrichtung hinein bewegt.

7. Verfahren nach einem vorstehenden Anspruch, bei dem Daten zwischen der mobilen Station (UE) und dem Funk-Kommunikationsnetz paketorientiert übertragen werden.

8. Verfahren nach einem vorstehenden Anspruch, bei dem Daten zwischen der mobilen Station (UE) und dem Funk-Kommunikationsnetz durch die Funknetz-Steuereinrichtung (UPS) geführt werden.

9. Verfahren nach einem vorstehenden Anspruch, bei dem die Übergabe der Verwaltung bzw. der Übertragung von Daten durch die mobile Station (UE) eingeleitet wird.

10. Verfahren nach einem vorstehenden Anspruch, bei dem die Übergabe der Verwaltung bzw. der Übertragung von Daten nach einem vorgegebenen Abfall der Verbindungsqualität, insbesondere eines letzten Diversitätszweigs, zur Funknetz-Steuereinrichtung (UPS1; S-UPS) ausgelöst wird, vorzugsweise nach einem Abfall unter einen vorgegebenen Grenzwert ausgelöst wird.

11. Verfahren nach einem vorstehenden Anspruch, bei dem während der Übergabe der Verwaltung bzw. der Übertragung von Daten eintreffende Daten zwischengespeichert werden.

12. Verfahren nach einem vorstehenden Anspruch, bei dem in Verbindung mit der Übergabe der Verwaltung bzw. der Übertragung von Daten ein virtueller Host (VMH) mit Funktionalität der mobilen Station (UE) in der verwaltenden Funknetz-Steuereinrichtung (UPS1, UPS2; S-UPS) eingerichtet wird.

13. Verfahren nach Anspruch 12, bei dem
in Verbindung mit der Übergabe der Verwaltung bzw. der Übertragung von Daten der virtuelle Host (VMH) hinsichtlich der Adressierung von der Netzseite aus die Funktion der mobilen Station (UE) übernimmt und/oder von der Seite der mobilen Station (UE) aus die Funktion eines Adressenspeichers und Adressenverwalters für funktionswichtige netzinterne Adressen übernimmt.

14. Verfahren nach einem vorstehenden Anspruch, bei dem in Verbindung mit der Übergabe der Verwaltung bzw. der Übertragung von Daten ein Mobil-Internetprotokoll (MIP) und/oder eine UMTS-Mobilitätsfunktion verwendet werden.

15. Funk-Kommunikationssystem mit zumindest einer ersten und einer zweiten Funknetz-Steuereinrichtung (UPS) zur Verwaltung zumindest einer mobilen Station (UE), wobei die Verwaltung der mobilen Station (UE) und/oder die Übertragung von zur mobilen Station (UE) zu übertragenden Daten von der ersten Funknetz-Steuereinrichtung (S-UPS) der zweiten Funknetz-Steuereinrichtung (D-UPS) übergebbar ist,
**gekennzeichnet durch**
zumindest eine Einrichtung zum Durchführen eines Verfahrens nach einem vorstehenden Anspruch, insbesondere eine Einrichtung zum Verwalten eines virtuellen Host mit aus der mobilen Station (UE) ausgelagerten Relokationsfunktionen.
